# EUROPEAN PATENT APPLICATION

(11) **EP 4 841 799 A1**
(43) Date of publication of application: **18.11.2026**
(21) Application number: 24916772.7
(22) Date of filing: 27.12.2024
(51) Int. Cl.: H01M 50/528, H01M 50/533

(54) **ELECTRODE ASSEMBLY AND ELECTROCHEMICAL APPARATUS**

(30) Priority: 08.01.2024 CN 202410027106
(71) Applicant: Ningde Amperex Technology Limited, Ningde, Fujian 352100 (CN)
(72) Inventor: ZHANG, Guowen, Ningde, Fujian 352100 (CN)
(74) Representative: Kraus & Lederer PartGmbB
(86) International application number: PCT/CN2024/143296
(87) International publication number: WO 2025/148725

(57) **Abstract**

The present application relates to the field of battery technologies and discloses an electrode assembly and an electrochemical apparatus. The electrode assembly includes a cell body, several first tab units, and a first adapter plate. The several first tab units are connected to the cell body. Some of the first tab units are gathered to form a first tab group, and the remaining ones are gathered to form a second tab group. Along a first direction, the first adapter plate has a first surface and a second surface opposite to each other, the first surface faces the cell body and is in insulated contact with the first tab units, and the second surface faces away from the cell body. The first tab group is in contact with the second surface after bending, and the second tab group, after bending, overlaps and is electrically connected with the first tab group. The present application enables the first tab group and the second tab group to be welded to external conductive sheets or the like in a third direction on the same surface of the first adapter plate, forming an offset arrangement, effectively reducing the space occupied in the first direction, reducing the volume of the electrode assembly, and contributing to improving the energy density of the electrochemical apparatus.

## Description

### CROSS-REFERENCE TO RELATED APPLICATIONS

The present application claims priority to Chinese Patent Application No. 202410027106.4, filed with the China Patent Office on January 8, 2024, entitled "ELECTRODE ASSEMBLY AND ELECTROCHEMICAL APPARATUS," which is incorporated herein by reference in its entirety.

### TECHNICAL FIELD

Embodiments of the present application relate to the field of battery technologies, and particularly, to an electrode assembly and an electrochemical apparatus.

### BACKGROUND

An electrochemical apparatus is configured to store or release electrical energy to supply power to an electrical apparatus. The electrode assembly in the electrochemical apparatus can effectively enhance charge-discharge performance by adopting a multi-tab structure. In the prior art, multiple tabs of the electrode assembly are stacked to form a tab cluster, and the tab cluster is bent multiple times to extend outside the packaging bag. The tab cluster of the above structure occupies a relatively large headroom, resulting in an increased volume of the electrochemical apparatus or a reduced energy density.

### SUMMARY

Some embodiments of the present application provide an electrode assembly and an electrochemical apparatus, so as to address the issue of the end portion of the electrode assembly occupying excessive space.

A technical solution adopted by an embodiment of the present application is to provide an electrode assembly including a cell body, first tab units, and a first adapter plate. Several first tab units are all connected to a first end portion of the cell body, where some of the first tab units are gathered to form a first tab group, and the remaining ones are gathered to form a second tab group. Along a first direction, the first adapter plate has a first surface and a second surface opposite to each other, the first surface faces the cell body and is in insulated contact with the first tab units, the second surface faces away from the cell body, the first tab group is in contact with the second surface after bending, and the second tab group, after bending, extends to a side of the second surface and is electrically connected to the first adapter plate.

In the present application, by gathering the first tab units to form the first tab group and the second tab group, the space occupied in the first direction is effectively reduced, thereby reducing the volume of the electrode assembly and contributing to improving the energy density of the electrochemical apparatus.

In some embodiments, along the first direction, the first tab group and the second tab group at least partially overlap after bending.

In the above solution, the first tab group and the second tab group are directly overlapped after bending, reducing processing costs by eliminating additional process steps, while the overlapping arrangement can enhance connection stability.

In some embodiments, a number N1 of the first tab units in the first tab group and a number N2 of the first tab units in the second tab group satisfy: 0.2 ≤ N1/N2 ≤ 1. By dividing the several first tab units into two thinner tab groups, the headroom in the first direction can be reduced, and in addition, the bending rebound stress of the first tab group and the second tab group can be reduced, not only reducing the pulling force at the connection between the first tab group and the second tab group and the cell body, but also improving the fixing effect of the first tab group and the second tab group with the first adapter plate, thereby enhancing connection stability.

In some embodiments, 0.8 ≤ N1/N2 ≤ 1. By dividing the several first tab units into a first tab group and a second tab group with substantially equal numbers, the thickness difference between the first tab group and the second tab group is small, making it easier to bend and stack them for connection. In other examples, when the free ends of the first tab group and the second tab group need to be trimmed, a structure with substantially equal thickness can reduce the difficulty of cutting the two tab groups.

In some embodiments, along a second direction, the first adapter plate has a first side surface and a second side surface opposite to each other, the first side surface being close to a bending portion of the first tab group, and the second side surface being close to a bending portion of the second tab group, where the second direction is perpendicular to the first direction. The first tab group has a first end and a second end opposite to each other, the first end of the first tab group being connected to the cell body, and along the second direction, a distance L1 between the second end of the first tab group after bending and the second side surface of the first adapter plate satisfies: 0 mm ≤ L1 ≤ K/2, where K is a distance between the first side surface and the second side surface of the first adapter plate in the second direction. By controlling the distance L1 between the second end of the first tab group after bending and the second side surface of the first adapter plate within an appropriate range, the first tab group after bending does not affect the bending of the second tab group, and the second end of the first tab group after bending can have sufficient contact area with the second surface of the first adapter plate to ensure current transmission capability.

In some embodiments, along the second direction, the cell body has a first main surface and a second main surface opposite to each other, the first main surface being close to the first side surface of the first adapter plate, and the second main surface being close to the second side surface of the first adapter plate. The second tab group has a first end and a second end opposite to each other, the first end of the second tab group being connected to the cell body, and along the second direction, a distance L2 between the second end of the second tab group after bending and the first main surface satisfies: 0 mm ≤ L2 ≤ K/2. By controlling the distance L2 between the second end of the second tab group after bending and the first main surface within an appropriate range, the second tab group, after bending, can have sufficient contact area with the first tab group to ensure current transmission capability, while also preventing the second end of the second tab group from extending beyond the first main surface of the cell body, avoiding extra space occupation and a reduction in the energy density of the electrochemical apparatus.

In some embodiments, 0.3 mm ≤ L1 ≤ 1.5 mm; and/or, 0.1 mm ≤ L2 ≤ 1.5 mm.

In some embodiments, along a third direction, the first adapter plate has a third side surface and a fourth side surface opposite to each other, where the first direction, the second direction, and the third direction are pairwise perpendicular; along the third direction, a distance L3 by which the third side surface extends beyond the first tab group satisfies: 0.5 mm ≤ L3 ≤ 10 mm; and/or, along the third direction, a distance L4 by which the fourth side surface extends beyond the first tab group satisfies: 0.5 mm ≤ L4 ≤ 10 mm. In the third direction, the third side surface and/or the fourth side surface extending beyond the first tab group by a certain distance allows the first adapter plate to be also welded to external components such as conductive sheets, adapter sheets, or terminal posts in the third direction after being welded to the first tab group and the second tab group, thereby reducing the space occupied in the first direction.

In some embodiments, 3 mm ≤ L3 ≤ 6 mm, and/or, 3 mm ≤ L4 ≤ 6 mm. To reduce the welding difficulty and process requirements between the first adapter plate and external components while avoiding an excessively length of the first adapter plate extending beyond the first tab group, the distance by which the third side surface and/or the fourth side surface extends beyond the first tab group should be appropriately set.

In some embodiments, the first adapter plate includes a metal plate and an insulating layer stacked along the first direction, the insulating layer being close to the cell body, and the insulating layer being in contact with the first tab group and the second tab group, respectively. Since the first electrode plates and the second electrode plates in the cell body are alternately arranged and have opposite polarities, that is, the first end portion of the cell body includes both the first electrode plates and the second electrode plates, providing an insulating layer between the metal plate and the first end portion of the cell body can prevent the metal plate from contacting the ends of the second electrode plates, thereby avoiding short circuits.

In some embodiments, along the first direction, a projection of the metal plate lies within a projection of the insulating layer. In some embodiments, along the second direction, a dimension of the insulating layer is greater than a dimension of the metal layer; and/or, along the third direction, a dimension of the insulating layer is greater than a dimension of the metal layer, where the first direction, the second direction, and the third direction are pairwise perpendicular. With the above structure, it is possible to prevent the metal plate from directly contacting the second electrode plates and causing short circuits due to vibration or mechanical impact during testing or use of the electrochemical apparatus, thereby ensuring the insulating effect of the insulating layer.

In some embodiments, the insulating layer includes a first adhesive layer, a thermal insulation layer, and a second adhesive layer. Along the first direction, the first adhesive layer bonds the metal plate and the thermal insulation layer, respectively, and the second adhesive layer bonds the thermal insulation layer and the first tab group and the second tab group, respectively. With the above structure, the insulating layer can provide insulation and adhesion while also providing thermal insulation, preventing high-temperature failure of the first electrode plates and/or the second electrode plates caused by high welding temperatures during laser welding of the first tab group and the second tab group to the metal plate in the first adapter plate, or preventing short circuits caused by direct contact between the first electrode plates and the second electrode plates due to shrinkage of the separator at high temperatures.

In some embodiments, a sum of the thickness of the first adapter plate and the insulating layer is G, a thickness of the first tab unit is g, a number of tabs in the first tab group is n1, and a number of tabs in the second tab group is n2, where n1 ≤ n2, and G satisfies: 0.1 mm ≤ G ≤ n1·g. This helps control the sum of the thicknesses of the first adapter plate and the insulating layer within an appropriate range, reducing the thickness of the first tab group, the second tab group, and the insulating layer in the first direction X of the cell 10.

In some embodiments, along the first direction, the first tab group and the second tab group do not overlap on the second surface after bending. The two tab groups are arranged not to overlap on the second surface after bending, thereby further reducing the headroom.

In some embodiments, portions of the first tab group and the second tab group are arranged along the second direction on the second surface after bending, the second direction being perpendicular to the first direction.

In some embodiments, the electrode assembly further includes several second tab units, the several second tab units being all connected to the first end portion of the cell body or all connected to a second end portion of the cell body, where some of the second tab units are gathered to form a third tab group, the remaining ones are gathered to form a fourth tab group, and the first end portion and the second end portion of the cell body are oppositely disposed in the first direction. The electrode assembly further includes a second adapter plate, and along the first direction, the second adapter plate has a third surface and a fourth surface opposite to each other, where the third surface faces the cell body and is in insulated contact with the second tab units, the fourth surface faces away from the cell body, the third tab group is in contact with the fourth surface after bending, and the fourth tab group is electrically connected with the third tab group after bending.

The present application provides an electrochemical apparatus including the electrode assembly described above, the electrochemical apparatus further including a terminal post welded to the adapter plate, where along the first direction, a projection of the terminal post does not overlap with the first tab group, and/or, along the first direction, a projection of the terminal post does not overlap with the second tab group.

The electrode assembly of the present application includes a cell body, several first tab units, and a first adapter plate. The several first tab units are all connected to a first end portion of the cell body, where some of the first tab units are gathered to form a first tab group, and the remaining ones are gathered to form a second tab group. Along a first direction, the first adapter plate has a first surface and a second surface opposite to each other, the first surface faces the cell body and is in insulated contact with the first tab units, the second surface faces away from the cell body, the first tab group is in contact with the second surface after bending, and the second tab group, after bending, overlaps and is electrically connected with the first tab group. With the above structure, the stacked thickness of the first tab group and the second tab group can be reduced, lowering the difficulty of bending both, addressing the issue in the prior art that it is difficult to assemble the electrode assembly into the housing of the electrochemical apparatus since the bending of the entire first tab unit is hard to control and causes high rebound stress. In addition, the first tab units can be welded to external components such as conductive sheets, adapter sheets, or terminal posts in the third direction on the same surface of the first adapter plate, that is, the first tab group and the second tab group can be offset from external components in the third direction, effectively reducing the space occupied in the first direction, reducing the volume of the electrode assembly, and contributing to improving the energy density of the electrochemical apparatus.

### BRIEF DESCRIPTION OF DRAWINGS

To more clearly illustrate the technical solutions in the specific embodiments of the present application, the drawings used in the description of the specific embodiments are briefly introduced below. In all drawings, similar elements or parts are generally identified by similar reference signs. The elements or parts in the drawings are not necessarily drawn to actual scale.
FIG. 1 is a schematic diagram of an electrode assembly according to an embodiment of the present application.
FIG. 2 is a schematic diagram of the electrode assembly from another perspective according to an embodiment of the present application.
FIG. 3 is a cross-sectional view of the electrode assembly along A-A in FIG. 2 according to an embodiment of the present application.
FIG. 4 is a cross-sectional view of a first adapter plate of the electrode assembly along B-B in FIG. 2 according to an embodiment of the present application.
FIG. 5 is a cross-sectional view of a first adapter plate of the electrode assembly along B-B in FIG. 2 according to another embodiment of the present application.
FIG. 6 is a cross-sectional view of a first adapter plate of the electrode assembly along B-B in FIG. 2 according to yet another embodiment of the present application.

Reference signs in the specific embodiments are as follows:
100. electrode assembly; 10. cell body; 10a. first end portion; 10b. second end portion; 11. first main surface; 12. second main surface; X. first direction; Y. second direction; Z. third direction; 13. first electrode plate; 14. second electrode plate; 15. separator; 20. first tab unit; 21. first tab group; 21a. first end of the first tab group; 21b. second end of the first tab group; 22. second tab group; 22a. first end of the second tab group; 22b. second end of the second tab group; 30. first adapter plate; 31. first surface; 32. second surface; 33. first side surface; 34. second side surface; 35. third side surface; 36. fourth side surface; 37. metal plate; 38. insulating layer; 381. first adhesive layer; 382. thermal insulation layer; 383. second adhesive layer; 40. second tab unit; 41. third tab group; 42. fourth tab group; and 50. second adapter plate.

### DESCRIPTION OF EMBODIMENTS

To facilitate understanding of the present application, the present application is described in more detail below with reference to the drawings and specific embodiments. It should be noted that when an element is described as being "fixed to" another element, it may be directly on the other element, or one or more intervening elements may be present. When an element is described as being "connected" to another element, it may be directly connected to the other element, or one or more intervening elements may be present. The terms "upper," "lower," "inner," "outer," "vertical," "horizontal," and the like used in this specification to indicate orientation or positional relationships are based on the orientation or positional relationships shown in the drawings, and are only for the convenience of describing the present application and simplifying the description, rather than indicating or implying that the referred device or element must have a specific orientation, be constructed, and operate in a specific orientation, and thus should not be construed as limiting the present application. Additionally, the terms "first," "second," and the like are used for descriptive purposes only and should not be understood as indicating or implying relative importance.

Unless otherwise defined, all technical and scientific terms used in this specification have the same meanings as commonly understood by those skilled in the technical field to which the present application pertains. The terms used in the specification of the present application are for the purpose of describing specific embodiments only and are not intended to limit the present application. The term "and/or" used in this specification includes any and all combinations of one or more related listed items.

Furthermore, the technical features involved in different embodiments of the present application described below can be combined with each other as long as they do not conflict with each other.

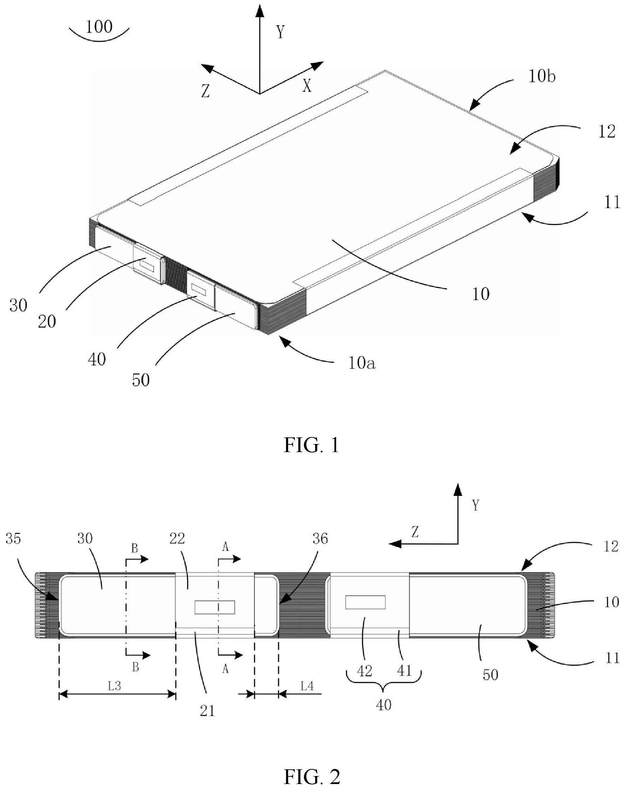

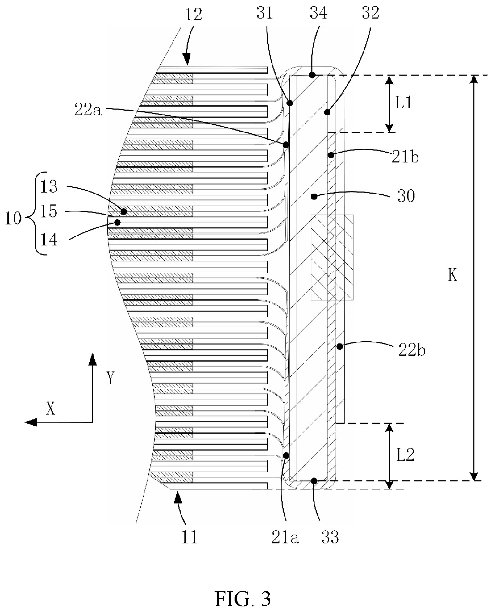

Referring to FIG. 1 to FIG. 3, an electrode assembly 100 of the present application includes a cell body 10, several first tab units 20, a first adapter plate 30, and several second tab units 40. Along a first direction X, the cell body 10 has a first end portion 10a and a second end portion 10b opposite to each other, the several first tab units 20 are all connected to the first end portion 10a of the cell body 10, and the several second tab units 40 are all connected to the first end portion 10a or the second end portion 10b of the cell body 10. Some of the first tab units 20 are stacked and gathered to form a first tab group 21, and the remaining ones are stacked and gathered to form a second tab group 22. Referring to FIG. 3, along the first direction X, the first adapter plate 30 has a first surface 31 and a second surface 32 opposite to each other, where the first surface 31 faces the cell body 10 and is in insulated contact with the first tab units 20. The second surface 32 faces away from the cell body 10, the first tab group 21 is in contact with the second surface 32 after bending, and the second tab group 22, after bending, overlaps and is electrically connected with the first tab group 21 in the first direction X.

In the present application, by adding the first adapter plate 30 and dividing the several first tab units 20 into the first tab group 21 and the second tab group 22, the stacked thickness of the first tab group 21 and the second tab group 22 can be reduced, lowering the difficulty of bending both, addressing the issue in the prior art that it is difficult to assemble the electrode assembly 100 into the housing of the electrochemical apparatus since the bending of the entire first tab unit 20 is hard to control and causes high rebound stress. In the prior art, after the entire first tab unit 20 is bent, welding with external components such as conductive sheets, adapter sheets, or terminal posts continues in the first direction X, increasing the space occupied in the first direction X. In the present application, the incorporation of the structure of the first adapter plate 30 allows the first tab units 20 to be welded to external components such as conductive sheets, adapter sheets, or terminal posts in the third direction Z on the same surface of the first adapter plate 30, that is, the first tab group 21 and the second tab group 22 can be offset from external components in the third direction Z, effectively reducing the space occupied in the first direction X, reducing the volume of the electrode assembly 100, and contributing to improving the energy density of the electrochemical apparatus. In addition, the incorporation of the structure of the first adapter plate 30 can provide protection for the first end portion 10a of the cell body 10 and avoid the case of first tab group 21 and the second tab group 22 being inserted back into the cell body 10 due to external impact, causing damage to the first electrode plates 13 and the second electrode plates 14 or even short circuits and fire, effectively ensuring the safety performance of the electrode assembly 100. The first direction X and the third direction Z are substantially perpendicular.

For the cell body 10 described above, refer to FIG. 1 and FIG. 2. Along the first direction X, the cell body 10 has a first end portion 10a and a second end portion 10b opposite to each other. Along a second direction Y, the cell body 10 has a first main surface 11 and a second main surface 12. The first main surface 11 is close to the first tab group 21, and the second main surface 12 is close to the second tab group 22. The first direction X, the second direction Y, and the third direction Z are pairwise substantially perpendicular.

Referring to FIG. 3, the cell body 10 includes several first electrode plates 13, several second electrode plates 14, and several separators 15, the separators 15 being disposed between the first electrode plates 13 and the second electrode plates 14 to prevent short circuits caused by direct contact between the first electrode plates 13 and the second electrode plates 14. The several first electrode plates 13, the several second electrode plates 14, and the several separators 15 are stacked to form a laminated cell body 10; or the several first electrode plates 13, the several second electrode plates 14, and the several separators 15 are stacked and wound to form a wound cell body 10. Each first electrode plate 13 is electrically connected to at least one first tab unit 20, and each second electrode plate 14 is electrically connected to at least one second tab unit 40.

In some embodiments, a number N1 of the first tab units 20 in the first tab group 21 and a number N2 of the first tab units 20 in the second tab group 22 satisfy: 0.2 ≤ N1/N2 ≤ 1. By dividing the several first tab units 20 into two thinner tab groups, the headroom in the first direction X can be reduced, and in addition, the bending rebound stress of the first tab group 21 and the second tab group 22 can be reduced, not only reducing the pulling force at the connection between the first tab group 21 and the second tab group 22 and the cell body 10, but also improving the fixing effect of the first tab group 21 and the second tab group 22 with the first adapter plate 30, thereby enhancing connection stability.

In some embodiments, 0.8 ≤ N1/N2 ≤ 1. By dividing the several first tab units 20 into a first tab group 21 and a second tab group 22 with substantially equal numbers, the thickness difference between the first tab group 21 and the second tab group 22 is small, making it easier to bend and stack them for connection. In other examples, when the free ends of the first tab group 21 and the second tab group 22 need to be trimmed, a structure with substantially equal thickness can reduce the difficulty of cutting both.

In some embodiments, referring to FIG. 3, the first tab group 21 has a first end 21a and a second end 21b opposite to each other, where the first end 21a is electrically connected to the cell body 10, and the second end 21b is a free end and is bonded to the second surface 32 of the first adapter plate 30. The second tab group 22 has a first end 22a and a second end 22b opposite to each other, where the first end 22a is connected to the cell body 10, and the second end 22b is a free end and is bonded to the first tab group 21.

In some embodiments, referring to FIG. 3, along the second direction Y, the first adapter plate 30 has a first side surface 33 and a second side surface 34 opposite to each other. The first side surface 33 is close to a bending portion of the first tab group 21, and the second side surface 34 is close to a bending portion of the second tab group 22. The first main surface 11 of the cell body 10 is close to the first side surface 33 of the first adapter plate 30, and the second main surface 12 of the cell body 10 is close to the second side surface 34 of the first adapter plate 30.

Along the second direction Y, a distance L1 between the second end 21b of the first tab group 21 after bending and the second side surface 34 of the first adapter plate 30 satisfies: 0 mm ≤ L1 ≤ K/2, where K is a distance between the first side surface 33 and the second side surface 34 of the first adapter plate 30 in the second direction Y. A distance L1 ≥ 0 mm indicates that the second end 21b of the first tab group 21 does not extend beyond the second side surface 34 in the second direction Y, but is located within the second surface 32 of the first adapter plate 30, thereby avoiding the second end 21b of the first tab group 21 affecting the bending of the second tab group 22. When the second end 21b extends beyond the second side surface 34, L1 is negative. The distance L1 ≤ K/2, that is, in the second direction Y, the length of the second end 21b of the first tab group 21 after bending is half or more of the width of the first adapter plate 30, and this allows the first tab group 21, after bending, to have a larger contact area with the second surface 32 of the first adapter plate 30 to ensure current transmission.

Further, the distance L1 between the second end 21b of the first tab group 21 after bending and the second side surface 34 of the first adapter plate 30 satisfies: 0.3 mm ≤ L1 ≤ 1.5 mm. When the second end 21b of the first tab group 21 is flush with the second side surface 34, the bending protrusion of the second tab group 22 at the second side surface 34 of the first adapter plate 30 is large, resulting in greater bending difficulty for the second tab group 22 and occupying more space in the first direction X and the second direction Y. To further reduce the occupied space, a certain space can be reserved between the second end 21b of the first tab group 21 and the second side surface 34, for example, a distance L1 ≥ 0.3 mm. When the second end 21b of the first tab group 21 is within the second surface 32 of the first adapter plate 30, a larger overlapping area between the first tab group 21 and the first adapter plate 30 is more conducive to current transmission, so there is no need to reserve too much space between the second end 21b of the first tab group 21 and the second side surface 34, for example, a distance L1 ≤ 1.5 mm.

Referring to FIG. 3, along the second direction Y, a distance L2 between the second end 22b of the second tab group 22 after bending and the first main surface 11 satisfies: 0 mm ≤ L2 ≤ K/2. When the distance L2 is 0 mm, in the second direction Y, the second end 22b of the second tab group 22 is flush with the first main surface 11 of the cell body 10 and does not extend beyond the first main surface 11, facilitating the assembly and installation of the electrode assembly 100 into the housing of the electrochemical apparatus. If the second end 22b of the second tab group 22 extends beyond the first main surface 11, space inside the housing is occupied, reducing the energy density of the electrochemical apparatus. The distance L2 ≤ K/2, that is, in the second direction Y, the length of the second end 22b of the second tab group 22 after bending is half or more of the width of the first adapter plate 30, and this allows the second tab group 22 to have a larger contact area with the first tab group 21 to ensure current transmission. For example, the distance L2 satisfies: 0.1 mm ≤ L2 ≤ 1.5 mm.

In some embodiments, referring to FIG. 2, along the third direction Z, the first adapter plate 30 has a third side surface 35 and a fourth side surface 36 opposite to each other. Along the third direction Z, a distance L3 by which the third side surface 35 extends beyond the first tab group 21 satisfies: 0.5 mm ≤ L3 ≤ 10 mm; and/or, along the third direction Z, a distance L4 by which the fourth side surface 36 extends beyond the first tab group 21 satisfies: 0.5 mm ≤ L4 ≤ 10 mm. In the third direction Z, the third side surface 35 and/or the fourth side surface 36 extending beyond the first tab group 21 by a certain distance allows the first adapter plate 30 to be welded to external components such as conductive sheets, adapter sheets, or terminal posts in the third direction Z after the first adapter plate 30 is welded to the first tab group 21 and the second tab group 22, thereby reducing the space occupied in the first direction X. When the distances L3 and L4 are less than 0.5 mm, it is difficult for the first adapter plate 30 to achieve welding connection with external components, and on the basis that the welding connection can be achieved, setting the protruding length of the first adapter plate 30 too long will increase the overall weight of the electrode assembly 100 and occupy space inside the electrochemical apparatus. Moreover, excessively long distances L3 and L4 may hinder the arrangement of the second tab units 40 connected to the first end portion 10a of the cell body 10. Therefore, setting the distances L3 and L4 to be less than or equal to 10 mm is sufficient. Further, to reduce the welding difficulty and process requirements for the first adapter plate 30 with external components while avoiding an excessively long extension of the first adapter plate 30 beyond the first tab group 21, in some examples, the distance L3 and/or the distance L4 may satisfy: 3 mm ≤ L3 ≤ 6 mm, and/or, 3 mm ≤ L4 ≤ 6 mm.

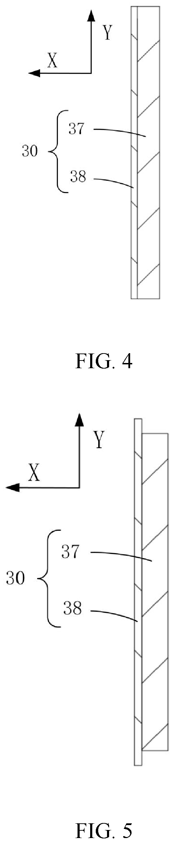

In some embodiments, referring to FIG. 3 and FIG. 4, the first adapter plate 30 includes a metal plate 37 and an insulating layer 38 stacked along the first direction X, the insulating layer 38 being close to the first end portion 10a of the cell body 10, and the insulating layer 38 being in contact with the first tab group 21 and the second tab group 22, respectively. Since the first electrode plates 13 and the second electrode plates 14 in the cell body 10 are alternately arranged and have opposite polarities, that is, the first end portion 10a of the cell body 10 includes both the first electrode plates 13 and the second electrode plates 14, to prevent the metal plate 37 from contacting the ends of the second electrode plates 14 and causing short circuits, an insulating layer 38 is provided between the metal plate 37 and the first end portion 10a of the cell body 10 to enable the metal plate 37 to form an electrical connection with the first tab group 21 and the second tab group 22.

In some embodiments, a sum of the thickness of the first adapter plate 30 and the insulating layer 38 is G, a thickness of the first tab unit 20 is g, a number of tabs in the first tab group 21 is n1, a number of tabs in the second tab group is n2, where n1 ≤ n2, and G satisfies: 0.1 mm ≤ G ≤ n1·g. This controls the sum of the thicknesses of the first adapter plate and the insulating layer within an appropriate range, reducing the thickness of the first tab group, the second tab group, and the insulating layer in the first direction X of the cell 10.

Specifically, with the thickness of the first tab unit 20 denoted as g, in the prior art where all the first tab units 20 are gathered in the same region, bent, and then welded, the thickness of the first tab units 20 after bending is denoted as m, where m = (n1 + n2)g. In these embodiments of the present application, the thickness of the first tab group 21 after the first bending of the first tab units 20 is n1·g, and the thickness of the second tab group 22 after the first bending is n2·g. Since the first tab units 20 of the first tab group 21 are separated, the second thickness m2 of the tab structure in the present application after the first bending is the larger of n1·g and n2·g. If n1 < n2, the thickness m2 of the tab structure in the present application is n2·g. Thus, as compared to the solution in the prior art where all tabs are gathered in the same region, bent, and then welding, the thickness reduction W of the tab structure in the present application is W = (n1 + n2)·g - n2·g = n1·g.

By limiting the first adapter plate 30 and the insulating layer 38 to G ≤ n1·g, the present application can improve energy density compared to the prior art. Therefore, in the present application, dividing the plurality of first tab units 20 of the tab structure into the first tab group 21 and the second tab group 22 not only reduces the size of the tab structure by lowering bending stress but also reduces the headroom in terms of the stacked thickness of the plurality of tabs 210, truly optimizing the tab structure to improve the energy density of the battery when the cell 10 is applied to a battery.

For example, the metal plate 37 is mainly made of materials such as aluminum, copper, nickel, titanium, copper-nickel alloy, aluminum-copper alloy, and stainless steel. The material of the insulating layer 38 is an electrolyte-resistant polymer adhesive, such as PP (polypropylene), PE (polyethylene), butyl rubber, acrylic adhesive, modified polyolefin, SIS rubber (thermoplastic styrene-butadiene rubber), and acrylic adhesive.

In some embodiments, referring to FIG. 5, to ensure the insulating effect of the insulating layer 38 and prevent the metal plate 37 from directly contacting the second electrode plates 14 and causing short circuits due to vibration or mechanical impact during testing or use of the electrochemical apparatus, along the first direction X, a projection of the metal plate 37 lies within a projection of the insulating layer 38. That is, along the second direction Y, a dimension of the insulating layer 38 is greater than a dimension of the metal layer. And/or, referring to FIG. 2, along the third direction Z, a dimension of the insulating layer 38 is greater than a dimension of the metal plate 37.

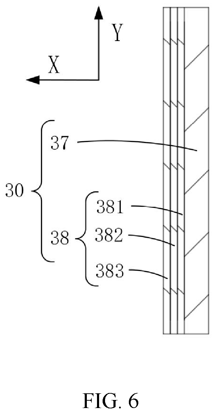

An insulating layer 38 with insulating and thermal insulation functions may be a single-layer structure or a composite layer structure. In some embodiments, referring to FIG. 3 and FIG. 6, the insulating layer 38 includes a first adhesive layer 381, a thermal insulation layer 382, and a second adhesive layer 383. Along the first direction X, the first adhesive layer 381 bonds the metal plate 37 and the thermal insulation layer 382, respectively, and the second adhesive layer 383 bonds the thermal insulation layer 382 and the first tab group 21 and the second tab group 22, respectively. In these embodiments, the insulating layer 38 adopts a composite structure of the thermal insulation layer 382 and adhesive layers, enabling the insulating layer 38 to provide insulation and adhesion while also providing thermal insulation, preventing high-temperature failure of the first electrode plates 13 and/or the second electrode plates 14 caused by high welding temperatures during laser welding of the first tab group 21 and the second tab group 22 to the metal plate 37 in the first adapter plate 30, or preventing short circuits caused by direct contact between the first electrode plates 13 and the second electrode plates 14 due to shrinkage of the separator 15 at high temperatures. The thermal insulation layer 382 serves to reduce the transmission of welding temperature, thereby ensuring the safety of the cell body 10.

In some embodiments, referring to FIG. 1 and FIG. 2, the electrode assembly 100 further includes a second adapter plate 50. Along the first direction X, the second adapter plate 50 has a third surface and a fourth surface opposite to each other, the third surface facing the cell body 10 and being in insulated contact with the second tab units 40, and the fourth surface facing away from the cell body 10. Some of the second tab units 40 are gathered to form a third tab group 41, and the remaining ones are gathered to form a fourth tab group 42. The third tab group 41 is in contact with the fourth surface of the second adapter plate 50 after bending, and the fourth tab group 42, after bending, overlaps and is welded to form an electrical connection with the third tab group 41. It is worth noting that the several second tab units 40 may be connected to the first end portion 10a or the second end portion 10b of the cell body 10, so that the electrode assembly 100 have the tabs led out from the same end or from two ends, respectively.

The structure and function of the second adapter plate 50 with the third tab group 41 and the fourth tab group 42 in the present application are substantially the same as the structure and function of the first adapter plate 30 with the first tab group 21 and the second tab group 22, and specific details can be referred to the foregoing embodiments and are not repeated here.

An embodiment of the present application also provides an electrochemical apparatus, the electrochemical apparatus including a housing, a positive electrode terminal, a negative electrode terminal, and the electrode assembly 100 described in the foregoing embodiments. The housing is provided with a receiving cavity, the electrode assembly 100 is received in the receiving cavity, the positive electrode terminal is electrically connected to the first adapter plate 30 and extends outside the housing, the negative electrode terminal is electrically connected to the second tab units 40 or the second adapter plate 50 and extends out of the housing, and the receiving cavity is filled with an electrolyte for electrochemical reactions of the electrode assembly 100. With the provision of the structure of the first adapter plate 30, the connection thickness of the positive electrode terminal and the first tab units 20 in the first direction X can be reduced, thereby reducing the space occupied by the end portion of the electrode assembly 100 in the receiving cavity and improving the energy density of the electrochemical apparatus. The structure and function of the electrode assembly 100 can be referred to the foregoing embodiments, and details are not repeated here.

The electrode assembly 100 of the present application includes a cell body 10, several first tab units 20, and a first adapter plate 30. The several first tab units 20 are all connected to a first end portion 10a of the cell body 10, where some of the first tab units 20 are gathered to form a first tab group 21, and the remaining ones are gathered to form a second tab group 22. Along a first direction X, the first adapter plate 30 has a first surface 31 and a second surface 32 opposite to each other, the first surface 31 faces the cell body 10 and is in insulated contact with the first tab units 20, the second surface 32 faces away from the cell body 10, the first tab group 21 is in contact with the second surface 32 after bending, and the second tab group 22, after bending, overlaps and is electrically connected with the first tab group 21. With the above structure, the first tab units 20 can be welded to external components such as conductive sheets, adapter sheets, or terminal posts in the third direction Z on the same surface of the first adapter plate 30, that is, the first tab group 21 and the second tab group 22 can be offset from external components in the third direction Z, effectively reducing the space occupied in the first direction X, reducing the volume of the electrode assembly 100, and contributing to improving the energy density of the electrochemical apparatus.

In some embodiments, along the first direction X, the first tab group 21 and the second tab group 22 do not overlap on the second surface 32 after bending. The two tab groups are arranged not to overlap on the second surface 32 after bending, thereby further reducing the headroom.

In some embodiments, portions of the first tab group 21 and the second tab group 22 are arranged along the second direction Y on the second surface 32 after bending, the second direction being perpendicular to the first direction X. That is, the portions after bending may be arranged along the second direction Y or along the third direction Z. When arranged along the second direction Y, only the portions of the first tab group 21 and the second tab group 22 after bending need to be trimmed to offset the two tab groups, enabling the two tab groups to not overlap after bending, further improving the space utilization rate in the first direction X.

In addition, the two tab groups may alternatively be arranged along the third direction Z. Specifically, the positions of which the two tab groups extend out are arranged along the third direction, and they are arranged along the third direction Z on the first adapter plate 30 after bending.

The above descriptions are merely embodiments of the present application and do not limit the patent scope of the present application. Any equivalent structural or procedural transformations made using the content of the specification and drawings of the present application, or directly or indirectly applied in other related technical fields, are similarly included within the patent protection scope of the present application.

## Claims

1. An electrode assembly comprising:
a cell body and several first tab units, the several first tab units being all connected to a first end portion of the cell body, wherein some of the first tab units are gathered to form a first tab group, and the remaining ones are gathered to form a second tab group; and
the electrode assembly further comprises a first adapter plate, wherein along a first direction, the first adapter plate has a first surface and a second surface opposite to each other, the first surface faces the cell body and is in insulated contact with the first tab units, the second surface faces away from the cell body, the first tab group is in contact with the second surface after bending, and the second tab group, after bending, extends to a side of the second surface and is electrically connected to the first adapter plate.

2. The electrode assembly according to claim 1, wherein
along the first direction, the first tab group and the second tab group at least partially overlap after bending.

3. The electrode assembly according to claim 1, wherein
a number N1 of the first tab units in the first tab group and a number N2 of the first tab units in the second tab group satisfy: 0.2 ≤ N1/N2 ≤ 1.

4. The electrode assembly according to claim 3, wherein$0.8 \leq N 1 / N 2 \leq 1 .$

5. The electrode assembly according to claim 2, wherein
along a second direction, the first adapter plate has a first side surface and a second side surface opposite to each other, the first side surface being close to a bending portion of the first tab group, and the second side surface being close to a bending portion of the second tab group, wherein the second direction is perpendicular to the first direction; and
the first tab group has a first end and a second end opposite to each other, the first end of the first tab group being connected to the cell body, and along the second direction, a distance L1 between the second end of the first tab group after bending and the second side surface of the first adapter plate satisfies: 0 mm ≤ L1 ≤ K/2, wherein K is a distance between the first side surface and the second side surface of the first adapter plate in the second direction.

6. The electrode assembly according to claim 5, wherein
along the second direction, the cell body has a first main surface and a second main surface opposite to each other, the first main surface being close to the first side surface of the first adapter plate, and the second main surface being close to the second side surface of the first adapter plate; and
the second tab group has a first end and a second end opposite to each other, the first end of the second tab group being connected to the cell body, and along the second direction, a distance L2 between the second end of the second tab group after bending and the first main surface satisfies: 0 mm ≤ L2 ≤ K/2.

7. The electrode assembly according to claim 6, wherein
0.3 mm ≤ L1 ≤ 1.5 mm; and/or, 0.1 mm ≤ L2 ≤ 1.5 mm.

8. The electrode assembly according to claim 5, wherein
along a third direction, the first adapter plate has a third side surface and a fourth side surface opposite to each other, wherein the first direction, the second direction, and the third direction are pairwise perpendicular;
along the third direction, a distance L3 by which the third side surface extends beyond the first tab group satisfies: 0.5 mm ≤ L3 ≤ 10 mm; and/or,
along the third direction, a distance L4 by which the fourth side surface extends beyond the first tab group satisfies: 0.5 mm ≤ L4 ≤ 10 mm.

9. The electrode assembly according to claim 8, wherein
3 mm ≤ L3 ≤ 6 mm, and/or, 3 mm ≤ L4 ≤ 6 mm.

10. The electrode assembly according to claim 1, wherein
the first adapter plate comprises a metal plate and an insulating layer stacked along the first direction, the insulating layer being close to the cell body, and the insulating layer being in contact with the first tab group and the second tab group, respectively.

11. The electrode assembly according to claim 10, wherein
along the first direction, a projection of the metal plate lies within a projection of the insulating layer.

12. The electrode assembly according to claim 10, wherein
along a second direction, a dimension of the insulating layer is greater than a dimension of the metal layer; and/or, along a third direction, a dimension of the insulating layer is greater than a dimension of the metal layer, wherein the first direction, the second direction, and the third direction are pairwise perpendicular.

13. The electrode assembly according to claim 10, wherein
the insulating layer comprises a first adhesive layer, a thermal insulation layer, and a second adhesive layer, and along the first direction, the first adhesive layer bonds the metal plate and the thermal insulation layer, respectively, and the second adhesive layer bonds the thermal insulation layer and the first tab group and the second tab group, respectively.

14. The electrode assembly according to claim 13, wherein
a sum of the thickness of the first adapter plate and the insulating layer is G, a thickness of the first tab unit is g, a number of tabs in the first tab group is n1, a number of tabs in the second tab group is n2, wherein n1 ≤ n2, and G satisfies: 0.1 mm ≤ G ≤ n1·g.

15. The electrode assembly according to any one of claims 1, 3, 4, or 10, wherein
along the first direction, the first tab group and the second tab group do not overlap on the second surface after bending.

16. The electrode assembly according to claim 15, wherein
portions of the first tab group and the second tab group are arranged along the second direction on the second surface after bending, the second direction being perpendicular to the first direction.

17. The electrode assembly according to claim 1, wherein
the electrode assembly further comprises several second tab units, the several second tab units being all connected to the first end portion of the cell body or all connected to a second end portion of the cell body, wherein some of the second tab units are gathered to form a third tab group, the remaining ones are gathered to form a fourth tab group, and the first end portion and the second end portion of the cell body are oppositely disposed in the first direction; and
the electrode assembly further comprises a second adapter plate, and along the first direction, the second adapter plate has a third surface and a fourth surface opposite to each other, wherein the third surface faces the cell body and is in insulated contact with the second tab units, the fourth surface faces away from the cell body, the third tab group is in contact with the fourth surface after bending, and the fourth tab group is electrically connected with the third tab group after bending.

18. An electrochemical apparatus comprising the electrode assembly according to any one of claims 1 to 14, wherein the electrochemical apparatus further comprises a terminal post welded to the adapter plate, and along the first direction, a projection of the terminal post does not overlap with the first tab group,
and/or, along the first direction, a projection of the terminal post does not overlap with the second tab group.
